Europäisches Patentamt

European Patent Office

Office européen des brevets

(19)

(11) Publication number: **0 294 155**
**A1**

(12) **EUROPEAN PATENT APPLICATION**

(21) Application number: 88304951.2

(22) Date of filing: 31.05.88

(51) Int. Cl.⁴: **B 41 M 1/30**
**C 09 D 11/00**

(30) Priority: 01.06.87 US 57131

(43) Date of publication of application:
07.12.88 Bulletin 88/49

(84) Designated Contracting States: **DE FR GB IT**

(71) Applicant: **Hewlett-Packard Company**
**3000 Hanover Street**
**Palo Alto California 94304 (US)**

(72) Inventor: **Morris, Peter C.**
**2397 Katherine Street**
**El Cajon, CA 92020 (US)**

**Hickman, Mark S.**
**202 Crestview Glen**
**Escondido, CA 92026 (US)**

(74) Representative: **Williams, John Francis et al**
**J.F. Williams & Co 34 Tavistock Street**
**London WC2E 7PB (GB)**

(54) Image development of overhead transparencies.

(57) An overhead transparency system which enhances the density of images printed on film by ink-jet techniques is provided. The film is coated with a layer of a transparent, hydrophilic material to a thickness which promotes controlled lateral diffusion of the printed ink.

The lateral diffusion is microscopically observed to begin within 1 minute after printing, eventually ceasing as the vehicle of the ink is sufficiently spread and evaporated by the lateral spreading. The optical density of the image increases as the ink diffuses, reaching a maximum density that is considerably greater than otherwise possible without an ink-coating system.

Sheets of such printed transparencies are protected by insertion between sheets of a vapor permeable, water absorbent material such as cellolose acetate.

EP 0 294 155 A1

**Description**

# IMAGE DEVELOPMENT OF OVERHEAD TRANSPARENCIES

## TECHNICAL FIELD

The present invention relates to ink-jet devices, such as ink-jet printers, and, more particularly, to methods of enhancing and optimizing image density on transparent media, such as surface-modified polyester films for use in overhead transparency projections.

## BACKGROUND ART

The use of ink-jet printers to form images such as alphanumeric characters and graphics on absorbent media such as paper is well-known.

However, the use of the same inks on transparent media, such as polyester films, commonly known as Mylar, has not produced the same high density of print, which results in intense colors, obtained with inherently absorbent media. Such non-porous media do not readily absorb the aqueous-based inks commonly employed in ink-jet printing, with the result that dots of ink do not spread laterally and are slow to dry.

Attempts have been made to remedy the situations in which ink-jet transparencies are slow to dry or lack capacity to absorb sufficient volumes of ink, with a goal of approaching performance obtained with highly absorbent, porous media. One such attempt is described in a techni cal paper by D. R. Titterington et al, "Development of a Transparent Receiving Sheet for Ink-Jet Printing", Journal of Imaging Science, Vol. 30, No. 1, pp. 4-8 (Jan/Feb 1986). This paper describes the use of certain transparent hydrophilic coatings to permit the use of aqueous-based inks for printing on transparent media. However, the reference mostly addresses the problem of slow drying of transparencies. It does not disclose ways to improve image density.

While such coatings are useful, considerable work remains to be done to develop suitable inks and coatings and methods of application that permit substantially uniform high color density images to be produced on transparent, non-porous media approaching that which can be produces on opaque, porous media, such as paper.

Often, it is desired to protect printed transparencies by insertion into clear plastic sheet protectors. Most such protective covers, however, when used soon after printing, do not permit obtaining images having the properties of a printed transparency allowed to dry in air.

Thus, a need remains to develop improved ways for generating stable overhead transparency projections using ink-jet printing methods.

## DISCLOSURE OF INVENTION

In accordance with the invention, a method of printing on an optically transparent, non-porous medium to provide images having increased color density comprises:

(a) outfitting an ink-jet device with an ink comprised of a dye and vehicle combination such that the vehicle can both solubilize the dye and transport it across thin stationary phases of hydrophilic resins until evaporation of the vehicle causes the dye to be deposited as a dot with an optimal spot diameter on the stationary phase;

(b) employing a medium with an imaging layer of a transparent, solvent-receptive material having a coating weight and polarity sufficient to promote lateral diffusion of specific inks through the layer;

(c) printing an ink on the coated medium; and

(d) permitting the ink to diffuse laterally through the image layer to the extent that adjacent ink dots merge and fill in any uncolored space between the dots.

The ink employed should comprise a solution of one or more dyes in a vehicle containing one or more suitable solvents. Such dyes must have suitable solubility, color, intensity, stability and polarity, and the solvents should have suitable volatility and polarity, for use in the practice of the invention.

Thus, an overhead transparency film which enhances the density of images printed by ink-jet techniques is provided. The latent dot spreading begins within minutes and proceeds for about 1 to 2 hours after the film has been printed and dried to the touch. The vehicle or solvent portion of the ink migrates radially from the dot origin and causes diffusion of the dye or colorant in an ink-receptive layer coated on the film substrate.

The resultant image has much higher optical density and more pleasing print quality than systems where individual drop dots can be discerned in the final image. Rather, a smooth uniform image prevails upon printing a film with the present invention.

Also in accordance with the invention, a sheet protector comprising a vapor permeable and water absorbent material is used in protecting printed transparencies. The use of such sheet protectors permits long term drying of the ink to approximate that in air. Consequently the final image has the quality of transparencies dried in air.

## BEST MODES FOR CARRYING OUT THE INVENTION

Improved image density on transparent films is obtained by providing the film with a coating which coacts with the ink to promote sufficient post-printing diffusion of the ink.

The clear, non-porous film base used in the practice of the invention is one that finds use in overhead transparency projections. Examplary of a material used in such applications is polyester film, such as polyethylene terephthalate (PET), commonly available as Mylar from E.I. duPont de Nemours, Inc. (Wilmington, DE).

The hydrophobic nature of the film prevents absorption of the ink dot deposited on the film by ink-jet printing. To overcome the lack of ink dot absorption, absorptive coatings or surface treatments are applied to permit reception of dots. However, upon projection of the image through an overhead projector, a pale or low density image is perceived with prior art approaches.

On the other hand, by providing an ink/film combination having certain specific properties, the ink dots spread laterally after printing to form continuous arrays of dots. The result is a projected image having a considerably greater density of color.

The film comprises a transparent, hydrophilic coating that will rapidly absorb the ink but not fix the dye in the coating, thus permitting its diffusion after printing. Essentially, the ink vehicle spreads laterally, followed by lateral spreading of the dye. The combination is such that as the vehicle becomes more diluted during spreading and evaporation, it is no longer able to transport the dye, and the lateral spreading of the dye ceases. How ever, the lateral movement of the dye that has occured is sufficient to create the desired effect.

An overhead transparency showing the desired performance can be generated by ink-jet printing with an ink/film combination comprising, for example, an ink consisting essentially of Food Black 2 dye in a 50/50 water/diethylene glycol vehicle printed on Arkwright, Inc. TP161 film comprising a water-insoluble, polyvinyl pyrrolidone-based hydrophilic coating formed on clear polyethylene terephthalate film.

The coating is applied to the polyester film to provide an optimal coat weight. Less than the optimum results in too much lateral diffusion of the dye, while greater than the optimum results in not enough diffusion of the dye. An example of a suitable coating is known as TP161, available from Arkwright, Inc., Fiskeville, RI.

A higher coating weight implies a thicker coating, and the ink is fixed quickly by penetrating the coating. Since, as indicated above, this is undesirable, the coating is kept thin, in order to promote lateral spreading of the ink, but not so thin as to cause extensive lateral spreading.

The optimal coating permits an initial dot size $\leq 1/DPI$, where DPI is the number of dots of ink per inch, and allows post print lateral spreading until the dot size grows to $\geq \sqrt{2}/DPI$. Commonly, DPI ranges from about 100 to 400.

The initial dot size must be $\leq 1/DPI$ to prevent coalescence or puddling of drops of ink. The final dot size must be $\geq \sqrt{2}/DPI$ to eliminate any uncolored area between adjacent dots.

Preferably, both sides of the polyester film are coated. This prevents buckling due to hygroscopicity of the coating, even though only one side is printed.

The coating may be applied by any of the conventional techniques for applying coatings to films, including air knife, doctor blade, gravure, metering rod, reverse roll, etc. The coating may be applied as an aqueous solution or emulsion or as a solvent lacquer. The coating may be post-cured thermally or by irradiation.

The ink preferably contains a water-based vehicle containing about 30 to 99 wt% water to impart volatility and solubility, with the balance comprising higher boiling solvents, such as glycols, glycol ethers, pyrrolidones and amides to optimize penetration and polarity. The ink preferably contains acid or direct dyes which are available in optimal solubility, colors and polarity.

Immediately following printing, a microscopic view of the image shows discernable dots. The optical density has a measureable value. However, after a period of time, the printed dots are observed to spread laterally until the dots are no longer discernable and the optical density increases considerably, as much as three-fold. After a further period of time, the lateral spreading ceases, as does the increase in optical density. Macroscopically, the only change observable is the increase in optical density, as seen in the increased intensity of colors.

Diffusion is observed to begin within about 1 minute after printing and ceases as a consequence of vehicle evaporation by about 1 to 24 hours later. The increase in color density is observed to follow the diffusion time onset and cessation. However, the image itself is dry to the touch in less than about 60 seconds. In direct contrast, ink on uncoated Mylar just beads up and wipes off, without absorping thereinto.

Use of a vapor permeable and water absorbent sheet protector permits obtaining substantially the same results as if the transparency is dried in air. An example of a suitable material is an acetate, e.g., cellulose diacetate or triacetate.

The use of sheet protectors made of acetate or other material having the properties indicated above for storing transparencies has several advantages over conventional sheet protectors such as polyvinyl chloride (PVC), polypropylene and polyester (polyethylene phthalate - PET). The vapor permeability allows for solvent (vehicle) from the inks to leave the film/sleeve system, and for long term drying of the inks to be similar to drying in air. The net result of this property is that the dot growth (intentional, contolled diffusion) on the transparencies in accordance with the invention will be nearly the same when air dried or placed in the preferred sheet protector.

Vapor impermeable sleeves are unlikely to match air dried quality, and are more likely to cause permanent changes in clarity due to solvent trapping.

Vehicle absorption at a proper level is necessary to prevent optical contact between the sheet protector and the imaged surface of the film, a behavior referred to as "blocking". Blocking is visible as blotches or puddles, and can permanently damage an image on coated transparencies. Blocking also appears on other transparencies when sleeved in conventional sheet protectors, especially if printing or plotting is done in humid environments, but this blocking does not typically cause permanent damage to the image. The use of acetate protectors in accordance with this aspect of the invention helps prevent blocking with any transparencies, and will also provide a quick initial drying of the solvents to help protect the image, while still maintaining complete optical clarity as solvents are absorbed.

To be more precise concerning the solubilising components, the amide may for example be formamide, dimethylformamide, acetamide or dimethylacetamide. The pyrrolidone may for example be N-methyl pyrrolidone.

## EXAMPLES

Example 1.

A polyester film medium possessing an ink-receptive coating comprising a water-insoluble polyvinyl pyrrolidone-based polymeric mixture, available from Arkwright Company (Fiskeville, RI) under the trade designation TP161, was printed with an ink-jet engine employing an ink of aqueous base and soluble dye. In particular, the ink comprised 48 parts diethylene glycol, 48 parts water and 4 parts Food Black 2. All parts are by weight, unless otherwise specified.

The ink was applied as 90 picoliter (pl) drops at 180 DPI (32,400 dots/in$^2$) with a double pass of the ink-jet printhead.

The optical density of the resulting image was measured immediately after printing and again at 5 minute intervals. The optical density increased from 0.45 at time $t=0$ to 1.05 maximum at time $t=60$ minutes. Magnified examination of the image showed distinct drop dots of 0.004 inch diameter at time $t=0$ which diffused together to give a smooth coverage at time $t=60$ minutes. Macroscopically, the image increased in intensity while retaining sharpness of boundaries.

For comparison, it was observed that printing on uncoated Mylar was not possible, due to beading of the ink, which was readily removable by wiping.

In another comparison, one with a coated Mylar film commercially available, which employs a coating comprising a water-soluble, polymeric mixture of polyvinylpyrrolidone and polyvinyl alcohol, and the recommended commercial ink comprising >95 parts water, 1 part polyethylene glycol and 4 parts black dye was applied as 120 pl drops at 240 x 120 DPI (28,800 dots/in$^2$).

Magnified examination of the image showed distinct drops of 0.0040 inch diameter at time $t=0$ and of 0.0045 inch diameter at time $t=60$ minutes. Macroscopically, the image appeared as a blotchy image and lighter in color than that obtained in accordance with the invention.

Example 2.

Printed transparencies, prepared in accordance with the teachings of the invention, were inserted into sheet protectors comprising various materials and the extent of vehicle retained in each transparency was compared over a period of time with an unprotected transparency. The results are summarized in the Table below.

**0 294 155**

## Table. Percent of Ink Vehicle Retained by Film
### Enclosed in 3 Mil Thick Sheet Protectors

| Sheet Protection Material | wt% Vehicle Retained | | |
|---|---|---|---|
| | 1 Day | 1 Week | 1 Month |
| None (open to air) | 78 | 10 | < 1 |
| Cellulose acetate | 86 | 21 | < 1 |
| Rigid polyvinyl chloride (PVC) | >99 | >99 | 98 |
| Plasticized PVC | >99 | >99 | 99 |
| Amorphous polypropylene | >99 | >99 | >99 |
| Biaxially oriented polypropylene | >99 | >99 | >99 |
| Polyester (PET) | 99 | 98 | 97 |

The data shows that of the commercially available sheet protector materials, acetate is uniquely suitable for protecting ink-jet transparencies while allowing the transparency to dry and preserve image definition.

Thus, there has been disclosed a method of printing on transparent, non-porous films such as polyester that results in improved color density. Many changes and modifications will occur to those of ordinary skill in the art, and all such changes and modifications are intended to fall within the scope of the invention, as defined by the appended claims.

## Claims

1. A method of printing on an optically transparent non-porous medium to provide images having increased colour density in which the non-porous medium has an imaging layer of a transparent, solvent-receptive material having a coating weight and polarity sufficient to promote lateral diffusion of specific inks through the layer; characterised in that the printing ink employed has a vehicle component which solubilises the dye component and transports it across the imaging layer by diffusion, so as to achieve a merging together of adjacent ink dots.

2. A method according to claim 1, characterised in that the solubilising component of the ink is a glycol, glycol-ether, a pyrrolidone or an amide.

3. A method according to claim 1 or 2, in which the ink comprises from 30 - 95 weight percent of water.

4. The method of claim 1,2 or 3 wherein said transparent medium comprises a polyester film base.

5. The method of any of claims 1 to 4, wherein said imaging layer comprises a water-insoluble, polyvinylpyrrolidone-based polymeric mixture.

6. A method according to any of the preceding claims, in which ink jet printing is used.

7. A printed material prepared by a method according to any of the preceding claims.

8. A printed material according to claim 7, having a protective cover of a vapour permeable water absorbent material.

9. A printed material according to claim 8 having a protective cover of cellulose acetate.

10. A printed material according to claims 7,8 or 9, being a transparency designed for overhead projection of the printed image.

11. A transparent sheet medium adapted to receive printed images comprising a clear plastic film which is coated on at least one side with a hydrophilic coating, characterised in that the thickness of the coating is small enough to allow only limited lateral spreading of a dot produced by an inkjet printer to produce merging of adjacent dots, but large enough not to allow unlimited spreading so that the image becomes distorted.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 191 645 (CANON K.K.) <br> * Abstract; column 10, example 1; columns 17-18, line 13 - columns 19-20, line 35 * | 1-7,11 | B 41 M 1/30 <br> C 09 D 11/00 |
| X | US-A-4 578 285 (MICHAEL S. VIOLA) <br> * Claims 1,4,5; column 4, lines 21-31 * | 1,2,4-7,11 | |
| P,X | EP-A-0 262 945 (DYNIC CORP.) <br> * Abstract; claims 1,2,13,16,17; page 5, example 1 * | 1,4,7,10,11 | |
| A | EP-A-0 198 636 (IMPERIAL CHEMICAL INDUSTRIES PLC) <br> * Abstract; page 8, line 34 - page 9, line 3 * | 1,5,10,11 | |

TECHNICAL FIELDS
SEARCHED (Int. Cl.4)

B 41 M
C 09 D

The present search report has been drawn up for all claims

| Place of search | Date of completion of the search | Examiner |
|---|---|---|
| THE HAGUE | 13-09-1988 | GIRARD Y.A. |

EPO FORM 1503 03.82 (P0401)